# EUROPEAN PATENT SPECIFICATION

(11) **EP 1 241 380 B1**
(45) Date of publication and mention of the grant of the patent: **06.01.2010**
(21) Application number: 02005198.3
(22) Date of filing: 08.03.2002
(51) Int. Cl.: F16H 7/18

(54) **Pivot member and transmission belt guide**
Schwenkteil und Führungsschiene eines Treibriemens
Pivot et rail de guidage d'une courroie de transmission

(30) Priority: 12.03.2001 JP 2001069238
(43) Date of publication of application: 18.09.2002
(73) Proprietor: Tsubakimoto Chain Co., Osaka 530-0018, (JP)
(72) Inventor: Inoue, Kozo, c/o Tsubakimoto Chain Co., Chuo-ku, Osaka-shi, Osaka (JP); Ono, Osamu, c/o Tsubakimoto Chain Co., Chuo-ku, Osaka-shi, Osaka (JP)
(74) Representative: Maisch, Thomas

(56) References cited:
- EP-A- 0 867 639
- US-A- 4 750 851
- US-A- 5 318 482
- US-A- 5 967 922
- PATENT ABSTRACTS OF JAPAN vol. 2000, no. 18, 5 June 2001 (2001-06-05) & JP 07 151111 A (HUCK INTERNATL INC), 13 June 1995 (1995-06-13)
- PATENT ABSTRACTS OF JAPAN vol. 2000, no. 03, 30 March 2000 (2000-03-30) & JP 11 336858 A (KOYO SEIKO CO LTD), 7 December 1999 (1999-12-07)
- PATENT ABSTRACTS OF JAPAN vol. 2002, no. 10, 10 October 2002 (2002-10-10) & JP 2002 181145 A (TSUBAKIMOTO CHAIN CO), 26 June 2002 (2002-06-26)

## Description

### BACKGROUND OF THE INVENTION

### Field of the Invention

The present invention relates to a pivot shaft member for mounting a slide contact guide for a transmission medium, such as a tensioner lever or a guide lever, to a fixed frame, with a transmission medium such as a chain or a belt coming into sliding contact with the slide contact guide in a drive unit such as a vehicular engine.

### Description of the Prior Art

Generally, in a drive unit such as a vehicular engine which transmits power through a transmission medium such as a chain or a belt, there is used a slide contact guide for a transmission medium, such as a movable tensioner lever or a fixed guide lever, which is mounted to a fixed frame such as a frame of the drive unit through a bolt or pin type pivot shaft member, to prevent the occurrence of chordal vibration or rolling of the transmission medium stretched between a driving side and a driven side or prevent an excessive variation of tension, thereby permitting a smooth travel.

As to such a slide contact guide for a transmission medium, various improvements have been made for ensuring durability against vibration and rolling of the transmission medium and against an excessive variation in tension. Improvements have also been made for reducing the weight of the guide. An example of a plastic guide for a transmission device as shown in Fig. 7, is described in Japanese Patent Application No. 382798/2000, published as JP 2002 18 1145 after the filing of the present invention.

From US-A-5 318 482 is known a pivot shaft member and a slide contact guide. The known guide is comprised of an elongated aluminum arm and an elongated shoe which is mounted on the arm. The pivot shaft member can be inserted through holes within the arm and the shoe for fixing the combination of guide and shoe within an automobile engine.

From PATENT ABSTRACTS OF JAPAN vol. 2000, no. 18, 5 June 2001 (2001-06-05) & JP 07 151111 A (HUCK INTERNATL INC), 13 June 1995 (1995-06-13), which constitutes the closest prior art, is known a pivot shaft member for securing workpieces. The pivot shaft member includes a bolt member with a tapered shank portion which can be inserted into openings in the workpiece. The tapered shank portion automatically aligns misaligned workpiece openings when the member is attached.

In the plastic guide of JP 2002 181145 patent application, indicated at G, in order to reduce the weight of the guide while ensuring required flexural rigidity and strength and facilitate the assembly and fabrication of the guide, a guide body G3 is formed integrally by molding a synthetic resin, the guide body G3 comprising a shoe G1 with which a travelling chain or belt comes into sliding contact and a lower side wall G2 formed on a back side of the shoe in the shape of a vertical plate extending in the longitudinal direction, and a reinforcing plate G5, which is a steel plate, is fitted into a slit G4 formed in the lower side wall G2 of the guide body G3. In this way the guide G is fabricated. The plastic guide G is mounted to a fixed frame F such as a frame of a drive unit with use of a bolt type pivot shaft member B which is inserted through mounting holes G6 and G7 formed in the guide G.

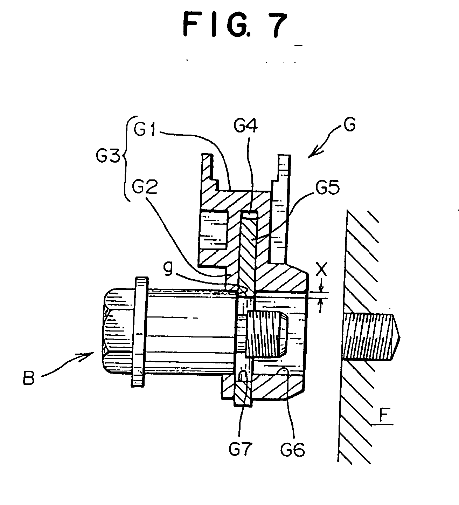

However, the following new knowledge was obtained. In the conventional plastic guide G for a transmission device, as shown in Fig. 7, since the reinforcing plate G5 is forcibly fitted into the slit G4 formed in the lower side wall G2 which slit is in a grippingly pressurized state, the reinforcing plate is often fitted in the slit while the mounting holes G6 and G7 formed respectively in the lower side wall G2 of the guide body G3 and in the reinforcing plate G5 are out of alignment with each other by an amount corresponding to a positional deviation of X.

As a result, when the plastic guide G with the mounting holes G6 and G7 not aligned by an amount of the positional deviation X is to be mounted to the fixed frame F, the bolt type pivot shaft member B is caught on an inner peripheral edge g of the mounting hole G7 formed in the reinforcing plate G5 and cannot pass through both mounting holes G6 and G7. Before the mounting, therefore, it is necessary that the positional deviation X between the mounting holes G5 and G7 formed in the lower side wall G2 and the reinforcing plate G5 respectively be corrected. Thus, a large mounting burden is imposed on the assembling work.

If the bolt type pivot shaft member B is forced to be inserted through the mounting holes G6 and G7 formed in the plastic guide G, the mounting hole G6 formed in the lower side wall G2 of a synthetic resin will be damaged, with consequent partial wear of the guide G, which may lead to deterioration of the sliding contact function or of the guide life.

Particularly, in the case where the plastic guide G for a transmission device is a movable tensioner lever, there arises, in addition to the above problems, a problem such that a smooth pivoting function around the bolt type pivot shaft member B as fulcrum, which is for following an excessive variation in tension of a travelling chain or belt to adjust the tension, cannot be fulfilled to a satisfactory extent.

### SUMMARY OF THE INVENTION

Accordingly, it is an object of the present invention to solve the above-mentioned problems of the prior art and provide a pivot shaft member and a slide contact guide for a transmission medium, which, when mounted to a fixed frame such as a frame of a drive unit, can correct a positional deviation between mounting holes, thereby permitting a positive and easy installation, and which can ensure its slide contact function and service life over a long period, even in the event there is a positional deviation between mounting holes formed respectively in a lower side wall of a guide body and in a reinforcing plate both assembled together as the guide.

For solving the foregoing problems, in a first aspect of the present invention there is provided a pivot shaft member to be inserted and fixed through mounting holes formed respectively in a longitudinally extending lower side wall of a guide body of a slide contact guide for a transmission medium and in a reinforcing plate for fixing the slide contact guide to a fixed frame, the slide contact guide comprising the guide body and the reinforcing plate, the guide body having an elongated shoe surface with which a travelling transmission medium such as a travelling chain or belt comes into sliding contact, the reinforcing plate being grippingly fitted along and into the lower side wall of the guide body, said pivot shaft member including a tapered, truncated cone-like guide inserting portion and a cylindrical guide support portion, the truncated cone-like guide inserting portion being inserted, at the time of mounting the guide, into the mounting holes while correcting a positional deviation between the mounting holes, and the cylindrical guide support portion being contiguous to the truncated cone-like guide inserting portion and onto which inner peripheral surfaces of the mounting holes are flushly fitted and supported after the mounting of the guide.

In a second aspect of the present invention there is provided, in combination with the above first aspect, a pivot shaft member wherein a screw portion smaller in diameter than the truncated cone-like guide inserting portion and adapted to be threadedly engaged with the fixed frame to fix the pivot shaft member is formed on an inserting tip side of the truncated cone-like guide inserting portion.

The pivot shaft member as referred to herein is at least provided with a tapered, truncated cone-like guide inserting portion which is inserted into mounting holes while correcting a positional deviation between the mounting holes and is also provided with a cylindrical guide support portion contiguous to the truncated cone-like guide inserting portion and onto which inner peripheral surfaces of the mounting holes are flushly fitted and supported. As to a concrete shape other than the truncated cone-like guide inserting portion and the cylindrical guide support portion, it may be a bolt or pin shape used as a separated and independent pivot shaft part at the time of mounting or it may be a bolt or pin shape implanted beforehand into the fixed frame.

It is optional whether the slide contact guide for a transmission medium to which the pivot shaft member of the present invention is applied is to be a movable tensioner lever which is for regulating an excessive variation in tension developed in a transmission medium stretched between a driving side and a driven side of a drive unit to permit a smooth travel or a fixed guide lever which is for preventing chordal vibration and rolling of a transmission medium to permit a smooth travel, insofar as the guide is of the type which is mounted to a fixed frame such as a frame of a drive unit through mounting holes formed respectively in the lower side wall of the guide body and in the reinforcing plate. As the material of the guide body, engineering plastics and fiber-reinforced plastics, which are superior in wear resistance and lubricity and which can fulfill the shoe function and attain the reduction of weight to a satisfactory extent, are preferred, but there also may be used other materials. Also as to the material of the reinforcing plate, no special limitation is placed thereon, but ferrous metals, nonferrous metals, engineering plastics, and fiber-reinforced plastics are preferred from the standpoint of flexural rigidity and strength.

According to the pivot shaft member in the first aspect of the present invention, even if there is a positional deviation between mounting holes formed respectively in the lower side wall of the guide body and in the reinforcing plate both assembled together as a slide contact guide for a transmission medium, the tapered, truncated cone-like guide inserting portion, at the time of mounting the guide to a fixed frame such as a frame of a drive unit, exhibits a wedging action for the mounting holes formed respectively in the lower side wall of the guide body and in the reinforcing plate and is thereby inserted through the mounting holes easily, whereupon the cylindrical guide support portion contiguous to the truncated cone-like guide inserting portion is fitted into the mounting holes flushly with the inner peripheral surfaces of the mounting holes and thereby supports the guide, so that the positional deviation of the mounting holes is easily corrected to surely correct the mounted state of both lower side wall and reinforcing plate.

According to the pivot shaft member in the above second aspect of the present invention, in addition to the function and effect attained in the above first aspect, since there is provided on the inserting tip side of the truncated cone-like guide inserting portion a screw portion to be threadedly engaged with the fixed frame to fix the pivot shaft member, the screw portion being smaller in diameter than the truncated cone-like guide inserting portion, first the screw portion of a smaller diameter than the truncated cone-like guide inserting portion passes through the mounting holes easily and begins to threadedly engage a fixed frame such as a frame of a drive unit, then a twisting force developed in the screw portion acts to pull the truncated cone-like guide inserting portion into the mounting holes formed respectively in the lower side wall of the guide body and the reinforcing plate, smoothly assisting the correction of a positional deviation between the mounting holes.

### BRIEF DESCRIPTION OF THE DRAWINGS

Fig. 1 is a perspective view of a pivot shaft member according to an embodiment of the present invention;
Fig. 2 is a sectional view showing an inserted state of the pivot shaft member during mounting;
Fig. 3 is a sectional view showing a supported state of the pivot shaft member after mounting;
Fig. 4 is a perspective view of a support shaft member according to another embodiment of the present invention;
Fig. 5 is an exploded perspective view of a fixed guide lever;

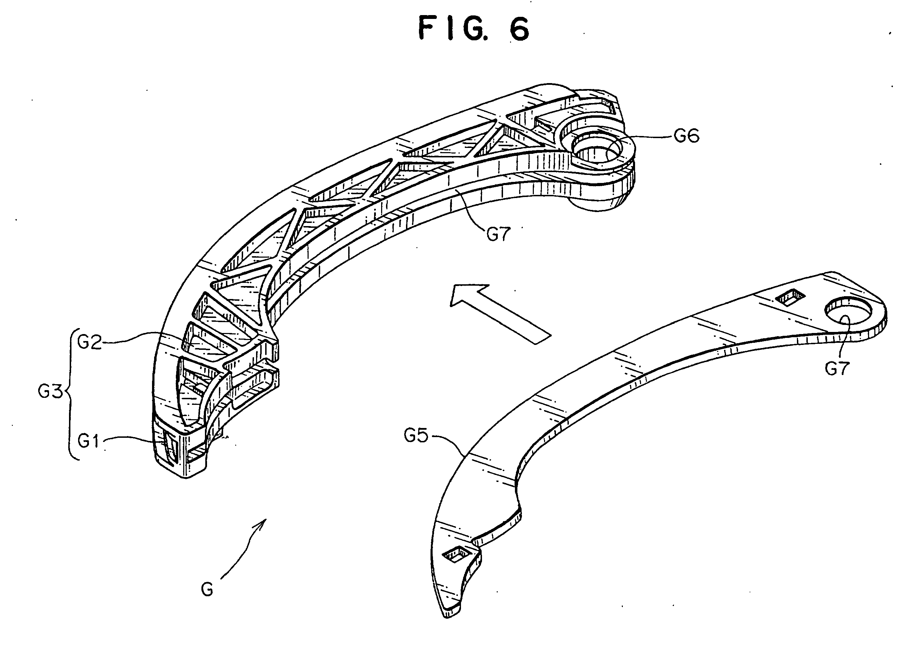

Fig. 6 is an exploded perspective view of a movable tensioner lever; and;
Fig. 7 is a sectional view showing a mounting defect encountered in the use of a mounting bolt.

### DETAILED DESCRIPTION OF PREFERRED EMBODIMENTS

Embodiments of the present invention will be described hereinunder with reference to the drawings.

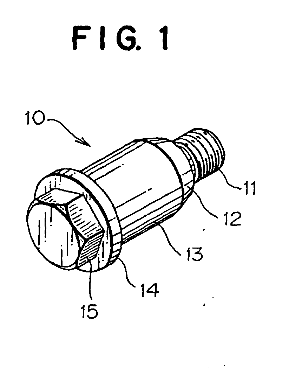

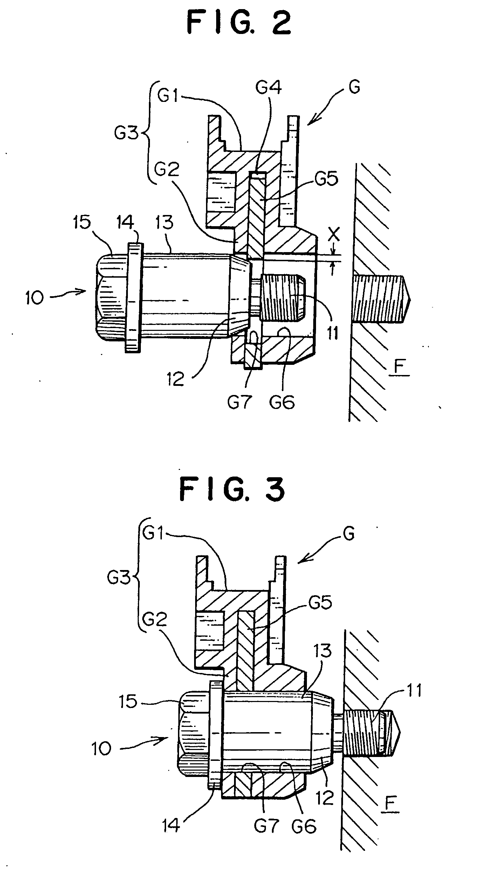

Fig. 1 is a perspective view of a pivot shaft member 10 according to a first embodiment of the present invention, Fig. 2 is a sectional view showing an inserted state of the pivot shaft member 10 in mounting a slide contact guide G for a transmission medium to a fixed frame F, and Fig. 3 is a sectional view showing a supported state of the pivot shaft member 10 after mounting.

The slide contact guide G for a transmission medium to which the pivot shaft member 10 of the first embodiment is applied is the same as the plastic guide for a transmission device in Japanese Patent Application No. 382798/2000 and functions as a movable tensioner lever which is for regulating an excessive variation in tension developed in a transmission medium such as a chain or a belt, the chain or belt being stretched between a driving side and a driven side of a drive unit such as a vehicular engine, to thereby permit a smooth travel.

More specifically, the slide contact guide G for a transmission medium, which is constituted by a movable tensioner lever, is fabricated by molding a synthetic resin integrally to form a guide body G3 and by subsequently fitting a reinforcing steel plate G5 grippingly into a slit G4 formed in a lower side wall G2 of the guide body G3. Then, the pivot shaft member of the present invention is inserted through both a mounting hole G6 formed in the lower side wall G2 and a mounting hole G7 formed in the reinforcing plate G5 and is secured to the fixed frame F such as a vehicular engine **compartment**.

As shown in Fig. 1, the pivot shaft member 10 of this embodiment comprises a screw portion 11 to be threadedly engaged with the fixed frame F to fix the pivot shaft member, a truncated cone-like guide inserting portion 12 which is formed contiguously to the screw portion 11 while increasing in diameter in a divergent shape from the screw portion to correct a positional deviation between the mounting holes G6 and G7, a cylindrical guide support portion 13 continguous to the truncated cone-like guide inserting portion 12 and adapted to be fitted into the mounting holes G6 and G7 flushly along inner peripheral surfaces of both holes to support the guide, an anti-dislodgment flange portion 14 formed contiguously to the cylindrical guide support portion 13 to prevent dislodgment of the slide contact guide G, and a hexahedral **drive** portion 15 formed continuously to the anti-dislodgment flange portion 14 so as to be **driven** with a wrench or the like. The screw portion 11, truncated cone-like guide inserting portion 12, the cylindrical guide support portion 13, anti-dislodgment flange portion 14, and drive portion 15 are coaxially arranged in this order from the insertion tip side toward the rear end on the mounting side.

Now, with reference to Figs. 2 and 3, the following description is provided about mounting the slide contact guide G for a transmission medium constituted by a movable tensioner lever to the fixed frame F such as a vehicular engine room with use of the pivot shaft member 10 of this embodiment.

As shown in Figs. 2 and 3, when the screw portion 11 of the pivot shaft member 10 of this embodiment comes into abutment against the fixed frame F through the mounting holes G6 and G7 of the slide contact guide G and begins to engage the frame F threadedly, a twisting force developed in the screw portion 11 acts to pull the truncated cone-like guide inserting portion 12 into the mounting holes G6 and G7 formed in the guide body G3 and the reinforcing plate G5 respectively, so that the truncated cone-like guide inserting portion 12 exhibits a wedging action for the mounting holes G6 and G7, whereby a positional deviation X between the mounting holes G6 and G7 is corrected easily.

Next, as the screw portion 11 is inserted threadedly while ensuring the corrected state of the positional deviation X, as shown in Fig. 3, the cylindrical guide support portion 13 is fitted into the mounting holes G6 and G7 flushly with the inner peripheral surfaces of the mounting holes to support the guide.

Therefore, in the case where the slide contact guide G for a transmission medium, which is constituted by a movable tensioner lever, is mounted to the fixed frame F using the pivot shaft member 10 of this embodiment, the positional deviation X between the mounting holes G6 and G7 of the slide contact guide G is corrected easily with the twisting force developed at the time of installation to positively correct the mounted state between the lower side wall G2 and the reinforcing plate G5. Therefore, the mounting work is effected in a positive and simple manner without such damage of the mounting hole G6 or mounting error as in the prior art, whereby the mounting burden can be greatly diminished. Besides, since the cylindrical guide support portion 13 is fitted into the mounting holes G6 and G7 flushly with the inner peripheral surfaces of the mounting holes to support the guide, it is possible to eliminate a partial wear of the surface of the shoe G1 with which a travelling transmission medium such as a travelling chain or belt comes into sliding contact and thereby possible to ensure the slide contact function of the slide contact guide G and ensure a long guide life. Besides, the pivot shaft member can full exhibit its pivoting function as a fulcrum for following an excessive variation in tension of a travelling chain or belt to regulate the tension of the chain or belt.

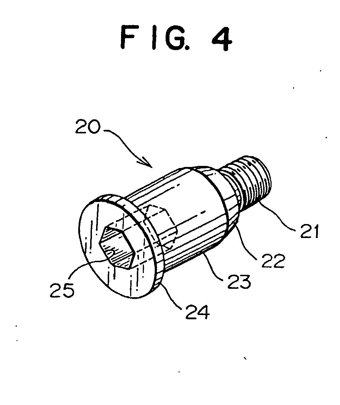

Fig. 4 is a perspective view of a pivot shaft member 20 according to a second embodiment of the present invention. In the pivot shaft member 20 of this embodiment, which shows a modification, the clamp portion 15 of the pivot shaft member 10 in the previous first embodiment is formed as a **drive** portion 25 which is a hexagonal hole formed in the interiors of both anti-dislodgment flange portion 14 and cylindrical guide support portion 13. As to other portions, the pivot shaft member 20 of this embodiment, like the pivot shaft member 10 of the first embodiment, is also provided with a screw portion 21, a truncated cone-like guide inserting portion 22, a cylindrical guide support portion 23, and an anti-dislodgment flange portion 24, and basic mounting functions are also the same as in the first embodiment. But the pivot shaft member 20 can be made smaller in size than the pivot shaft member 10 of the first embodiment.

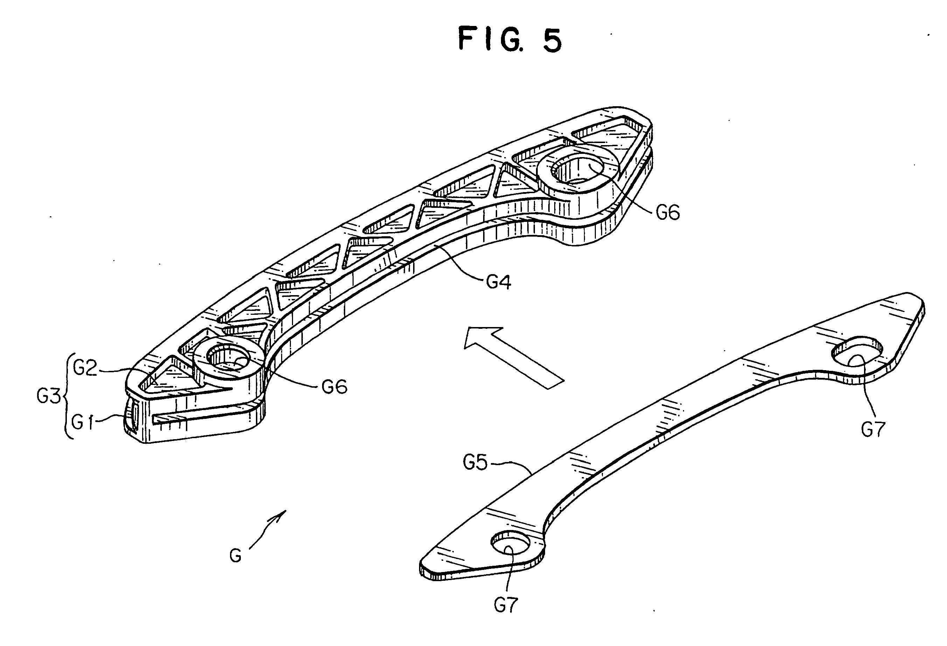

The slide contact guide G for a transmission medium, to which the pivot shaft member of the present invention is applied, is a fixed guide lever for preventing chordal vibration and rolling from being generated in a transmission medium such as a chain or belt stretched between a driving side and a driven side of a drive unit, thereby permitting a smooth travel. Also in such a fixed guide lever, as in the foregoing movable tensioner lever, a guide body G3 is formed integrally by molding a synthetic resin, the guide body G3 being composed of a shoe G1 with which a travelling transmission medium such as a travelling chain or belt comes into sliding contact and a lower side wall G2 formed on the back side of the shoe G1 in the shape of a vertical plate extending longitudinally, and a reinforcing plate G5 made of steel is fitted grippingly into a slit G4 formed in the lower side wall G2 of the guide body G3. The guide G thus fabricated is secured to the fixed frame such as a vehicular engine **compartment** through mounting holes G6 and G7 formed in the lower side wall G2 and the reinforcing plate G5 respectively. Thus, the pivot shaft member 10 of the first embodiment or the pivot shaft member 20 of the second embodiment in the present invention is applicable to the slide contact guide G shown in Fig. 5.

As set forth above, the pivot shaft member for a slide contact guide for a transmission medium according to the present invention can be mounted to a fixed frame such as a frame of a drive unit even if there is a positional deviation between mounting holes formed respectively in a lower side wall of the body of the guide as fabricated and in a reinforcing plate. Particularly, the pivot shaft member brings about the following effects peculiar to the present invention.

According to the pivot shaft member in the first aspect of the present invention, when the guide is to be mounted to a fixed frame such as a frame of a drive unit, the tapered, truncated cone-like guide inserting portion of the pivot shaft member exhibits a wedging action for the mounting holes formed in the lower side wall and the reinforcing plate respectively and thus can be easily inserted through the mounting holes, whereby a positional deviation between the mounting holes is corrected easily and hence a mounted state between the lower side wall and the reinforcing plate is surely corrected. Thus, without such damage of the mounting holes and mounting error as in the prior art, the mounting work can be effected in a positive and simple manner and hence it is possible to greatly diminish the mounting burden.

Moreover, according to the pivot shaft member in the first aspect of the present invention, the cylindrical guide support portion, which is contiguous to the truncated cone-like guide insertion portion, is fitted into the mounting holes flushly with the inner surfaces of the mounting holes to support the guide, so that it is possible to eliminate a partial wear of the shoe surface with which a travelling transmission medium such as a travelling chain or belt comes into sliding contact and therefore possible to ensure both contact slide function of the guide and guide life over a long period. Particularly, in the case where the plastic guide for a transmission device is a movable tensioner lever, the pivot shaft member can satisfactorily fulfill its pivoting function as a fulcrum for following an excessive variation in tension of a travelling chain or belt to regulate the tension.

Further, according to the pivot shaft member in the second aspect of the present invention, in addition to the effects attained by the pivot shaft member in the first aspect, since a screw portion smaller in diameter than the truncated cone-like guide inserting portion, which is for threaded engagement with a fixed frame such as a frame of a drive unit to fix the pivot shaft member, is provided on the inserting tip side of the truncated cone-like guide inserting portion, a twisting force developed in the screw portion when the screw portion begins to threadedly engage the fixed frame acts to pull the truncated cone-like guide inserting portion into the mounting holes formed in the lower side wall of the guide body and the reinforcing plate respectively. In this way the labor required for correcting a positional deviation between the mounting holes can be diminished and a smooth travel is ensured.

## Claims

1. A pivot shaft member (10; 20) and a slide contact guide (G) for a transmission medium, said pivot shaft member (10; 20) being to be inserted and fixed through mounting holes (G6, G7) formed respectively in a longitudinally extending lower side wall (G2) of a guide body (G3) of the slide contact guide (G) and in a reinforcing plate (G5) for fixing the slide contact guide (G) to a fixed frame (F),
said slide contact guide (G) comprising said guide body (G3) and said reinforcing plate (G5), said guide body (G3) having an elongated shoe surface with which a travelling transmission medium such as a travelling chain or belt comes into sliding contact, said reinforcing plate (G5) being grippingly fitted along and into said lower side wall (G2) of said guide body (G3),
said pivot shaft member (10; 20) including a tapered, truncated cone-like guide inserting portion (12; 22) and a cylindrical guide support portion (13; 23), said truncated cone-like guide inserting portion (12; 22) being inserted, at the time of mounting the guide (G), into said mounting holes (G6, G7) while correcting a positional deviation between the mounting holes (G6, G7), and said cylindrical support portion (13; 23) being contiguous to said truncated cone-like guide inserting portion (12; 22) and onto which inner peripheral surfaces of said mounting holes (G6, G7) are flushly fitted and supported after the mounting of the guide (G).

2. A pivot shaft member (10; 20) and a slide contact guide (G) for a transmission medium according to claim 1, wherein a screw portion (11; 21) smaller in diameter than said truncated cone-like guide inserting portion (12; 22) and adapted to be threadedly engaged with the fixed frame (F) to fix the pivot shaft member (10; 20) is formed on an inserting tip side of said truncated cone-like guide inserting portion (12; 22).

## Patentansprüche

1. Ein Schwenkschaftelement (10; 20) und eine Gleitkontaktführung (G) für ein Übertragungsmedium, wobei das Schwenkschaftelement (10; 20) vorgesehen ist, um in Montagedurchgänge (G6, G7) eingesetzt und durch diese befestigt zu werden, die jeweils in einer sich längs erstreckenden unteren Seitenwand (G2) eines Führungskörpers (G3) der Gleitkontaktführung (G) und in einer Verstärkungsplatte (G5) ausgebildet sind, um die Gleitkontaktführung (G) an einem festen Rahmen (F) zu befestigen,
wobei die Gleitkontaktführung (G) den Führungskörper (G3) und die Verstärkungsplatte (G5) aufweist, wobei der Führungskörper (G3) eine längliche Schuhfläche aufweist, mit der ein umlaufendes Übertragungsmedium wie beispielsweise eine umlaufende Kette oder ein umlaufender Riemen in Gleitkontakt gelangt, und wobei die Verstärkungsplatte (G5) klemmend entlang der und in die untere Seitenwand (G2) des Führungskörpers (G3) eingepasst ist, und
wobei das Schwenkschaftelement (10; 20) einen konischen, kegelstumpfartigen Führungseinsetzabschnitt (12; 22) und einen zylindrischen Führungsstützabschnitt (13; 23) aufweist, wobei der kegelstumpfartige Führungseinsetzabschnitt (12; 22) zum Zeitpunkt der Montage der Führung (G) in die Montagedurchgänge (G6, G7) eingesetzt wird, während er eine Positionsabweichung zwischen den Montagedurchgängen (G6, G7) korrigiert, und wobei der zylindrische Führungsstützabschnitt (13; 23) an den kegelstumpfartigen Führungseinsetzabschnitt (12; 22) angrenzt und auf ihm nach der Montage der Führung (G) die inneren Umfangsflächen der Montagedurchgänge (G6, G7) bündig angeordnet und abgestützt sind.

2. Ein Schwenkschaftelement (10; 20) und eine Gleitkontaktführung (G) für ein Übertragungsmedium nach Anspruch 1, wobei ein Schraubabschnitt (11; 21), der einen kleineren Durchmesser als der kegelstumpfartige Führungseinsetzabschnitt (12; 22) aufweist und zum Schraubeingriff mit dem festen Rahmen (F) angepasst ist, um das Schwenkschaftelement (10; 20) zu befestigen, auf einer Einsetzspitzenseite des kegelstumpfartigen Führungseinsetzabschnitts (12; 22) ausgebildet ist.

## Revendications

1. Elément d'arbre de pivot (10 ; 20) et un guide de contact coulissant (G) pour un support de transmission, ledit élément d'arbre de pivot (10 ; 20) devant être inséré et fixé dans des trous de montage (G6, G7) formés respectivement dans une paroi latérale inférieure (G2) s'étendant longitudinalement d'un corps de guide (G3) du guide de contact coulissant (G) et dans une plaque de renforcement (G5) pour fixer ledit guide de contact coulissant (G) sur un châssis fixe (F),
ledit guide de contact coulissant (G) comprenant ledit corps de guide (G3) et ladite plaque de renforcement (G5), ledit corps de guide (G3) ayant une surface de patin allongée avec laquelle un support de transmission mobile tel qu'une chaîne ou courroie mobile, vient en contact coulissant, ladite plaque de renforcement (G5) étant montée par préhension le long et dans ladite paroi latérale inférieure (G2) dudit corps de guide (G3),
ledit élément d'arbre de pivot (10 ; 20) comprenant une partie d'insertion de guide de forme tronconique progressivement rétrécie (12 ; 22) et une partie de support de guide cylindrique (13 ; 23), ladite partie d'insertion de guide de forme tronconique (12 ; 22) étant insérée, lors du montage du guide (G), dans lesdits trous de montage (G6, G7) tout en corrigeant une déviation de position entre les trous de montage (G6, G7) et ladite partie de support cylindrique (13 ; 23) étant contiguë à ladite partie d'insertion de guide de forme tronconique (12 ; 22) et sur laquelle les surfaces périphériques internes desdits trous de montage (G6, G7) sont montées de niveau et supportées après le montage du guide (G).

2. Elément d'arbre de pivot (10 ; 20) et un guide de contact coulissant (G) pour un support de transmission selon la revendication 1, dans lesquels une partie de vis (11 ; 21) est plus petite du point de vue du diamètre que ladite partie d'insertion de guide de forme tronconique (12 ; 22) et adaptée pour être mise en prise par filetage avec le châssis fixe (F) pour fixer l'élément d'arbre de pivot (10 ; 20) et est formée sur un côté de pointe d'insertion de ladite partie d'insertion de guide de forme tronconique (12 ; 22).
